# EUROPEAN PATENT APPLICATION

(11) **EP 2 606 743 A1**
(43) Date of publication of application: **26.06.2013**
(21) Application number: 11195154.7
(22) Date of filing: 22.12.2011
(51) Int. Cl.: A23L 1/00, A23L 1/19, A23C 9/15, A23C 9/152, A23D 7/005, A23P 1/16, B65D 83/14

(54) **Whipped spreadable fat product**

(71) Applicant: Grupo Leche Pascual, S.A.U., 28050 Madrid (ES); CO.DA.P Cola Dairy Products S.p.A., 80122 Napoli (IT)
(72) Inventor: Reñe Bañeres, Daniel, 09400 ARANDA DE DUERO (ES); Tricarico, Maria Cristina, 81100 CASERTA (IT); Fernandez-Vega Romero, Beatriz, 09471 FUENTESPINA (ES); Vuozzo, Daniela, 87100 COSENZA (IT); Villar Gonzalez, Ignacio, 09400 ARANDA DE DUERO (ES); Barbetta, Cristiano, 80147 Napoli (IT)
(74) Representative: Sugrañes Patentes y Marcas

(57) **Abstract**

The present invention relates to a liquid edible fat emulsion suitable for being packaged in a pressurized container with a gas propellant. The invention also relates to a whipped spreadable fat product dispensed from said pressurized container and to the process for obtaining the whipped spreadable fat product.

## Description

### Technical field of the invention

The present invention relates to a liquid edible fat emulsion suitable for being packaged in a pressurized container with a gas propellant. The invention also relates to a whipped spreadable fat product dispensed from said pressurized container and to the process for obtaining the whipped spreadable fat product.

### Background of the invention

Butter, margarine and dairy spreads are member of a group commonly identified as "fat spreads" or "spreadable fat products", which are emulsions of water and oil/fat derived from milk or other animal and/or plant sources. "Spreadable fat products" are defined as having a fat content less than 90% but more that than 10%, the fat content must represent at least two thirds of the dry matter (excluding salt), they should remain solid at room temperature (20 °C) and are suitable for use as spreads.

There are three types of "spreadable fat products" depending on the origin of the fat used: "milk fat products" such as butter and dairy spreads, "vegetable or animal fat products" such as margarine and fat spreads and, "mixed fat products" such as blends and blended spreads.

Butter, margarine and (full fat) blends must contain not less than 80% fat but less than 90% fat, a maximum of 16% water and 2% non-fat solids. Butter is a water-in-oil type emulsion, in which a relatively low volume fraction of water droplets are trapped within a partially crystalline fat matrix. Three-quarter fat butter, three-quarter fat margarine and three-quarter fat blend (also called reduced fat butter, reduced fat margarine and reduced fat blend) should contain between 60% and 62% fat, wherein the origin of said fat is milk, vegetable/animal or mixtures thereof respectively. Half-fat butter, half-fat margarine and half-fat blend (also called low-fat or light products) should contain between 39% and 41 % fat. Products with other fat contents comprise dairy spreads, fat spreads and blended spreads at different fat percentages. Regulations defining "spreadable fats" compositions in the European Union are governed by the EC Council Regulation 2991/94.

There is a continuous desire among consumers for foods that are ready-to-eat. In particular, consumers have in recent times been desirous of spreadable fat products that resemble traditional butter in mouthfeel and texture, but on the other hand are spreadable at refrigeration temperature while maintaining a smooth, creamy mouthfeel and fresh taste.

Whipped fat products and fat products packaged in a pressure container are known in the art, typically these comprise certain soft cheese products and whipped cream products. For a fat product or edible fat emulsion to be packed in a pressure vessel, low viscosity or high fluidity is generally required, therefore these products typically have low fat contents or high amounts of water, contain certain additives or require high temperatures in order to be packaged, the temperature used is determined by the viscosity of the product and its fluidity.

For example, JP 2006067959 describes a spray-type solid oil or fat product obtained by dissolving a solid oil, fat or wax in a hydrocarbon and filling the product in a spray can. The solid oil, fat or wax has a melting point between 20 °C and 50 °C and preferably comprises butter, margarine, lard, chocolate oil and fat, cacao butter or various wax. The hydrocarbon has a boiling point of from -50 °C to 10 °C and is preferably propane, n-butane, isobutane or liquefied propane gas (LPG). Moreover, JP 2006174747 discloses a similar spray-type solid oil obtained by dissolving a solid oil or wax with alcohol in a hydrocarbon, the mixture is also packaged in a spray can. The alcohol preferably comprises ethyl alcohol and the alcohol concentration is ≥95 vol%. The hydrocarbon has a boiling point between -50 °C and 10 °C and preferably comprises propane, n-butane or LPG.

DE 4215364 describes a cocoa butter solution prepared by melting cocoa butter at 39-48 °C, cooling slowly for 7-13 hours to 34-25 °C, and dissolving said cocoa butter in medical benzine with constant stirring. The resulting solution can be sprayed under pressure through a nozzle, using a propellant gas.

EP 2338352 discloses butter and a process for packaging said butter in a package, such as a spray container, a tube type container, or a dispensing package, although the resulting dispensed product is not described and no working example is disclosed for a packaged product. The butter obtained by the process disclosed therein has a viscosity value between 300000 and 500000 Poises for a stress ramp performed at 10 °C from 0.0 to 100 Pa in 300 s. As consequence, a butter of such viscosity might be unsuitable for packaging in a spray type container, and therefore additional heating might be needed to improve the fluidity of the butter to enable the packaging. Furthermore, a packaged butter of said viscosities is in practice difficult to be sprayed, ejected or dispensed from a pressurize container in a whipped spreadable form.

Indeed, when the foods in the form of a water-in-oil type emulsion, which are usually used as spread, are made into foods sealed in pressurized containers, it is problematic for use as spreads, since said spreadable fat products can do not have a suitable plasticity for being dispensed from the container and they might not form a stable whipped product with the appropriate organoleptic properties, spreadability, stability, texture, consistency or appearance of a commercial spreadable fat product.

US 7498050 describes peanut butter or a chocolate spread composition held inside a pressurized container to prevent oil separation. In particular the spread composition disclosed therein is held in one chamber of the container and the propellant is placed on a second separated chamber. Said propelled is used as the pressure-generating agent in the container and gives the energy required to expel the packed product without being in contact with the product, but does not dispense the spread composition in a whipped form.

Consequently, whipped spreadable fat products, such butter or margarine, have not been previously formulated appropriately to meet the special challenges when packaged in a pressurized container or when are dispensed from the container in a whipped solid-like form.

In view of the above, there is still a need to develop new liquid edible fat emulsions, in a manner that can be packaged in an appropriated pressure container such as a spray can, aerosol or siphon bottle, while the resulted whipped spreadable fat product dispersed from the container (for example whipped butter) maintains its organoleptic properties, mouthfeel, spreadability, stability and appearance.

### Explanation of the invention

The present invention provides a liquid edible fat emulsion with a total fat content between 10% and 80%, intended to be packaged in a pressurized container with a gas propellant. Said packaging allows the liquid edible fat emulsion to be dispensed in a whipped state. The resulting whipped product is a solid-like spreadable fat product with good organoleptic properties, consistency, texture and appearance.

The claimed liquid edible fat emulsion solves the aforementioned technical problem by providing a suitable liquid edible fat emulsion, which has low viscosity and therefore can be packaged in an appropriated pressurized container, such as a spray can, aerosol or siphon bottle, without the need of further treatment or processing. Furthermore, the present invention provides a liquid edible fat emulsion packaged in a pressurized container in combination with a suitable gas propellant, which enables to dispense the liquid fat emulsion in a spreadable solid-like whipped form.

After thorough research, the inventors have surprisingly found that a gas propellant comprising nitrous oxide or a mixture of nitrous oxide and nitrogen in an amount between 1.6 g and 3.2 g of gas propellant per 100 g of liquid fat emulsion, enables the fat emulsion to be ejected from the container through the container nozzle and/or valve together with the gas propellant in the right manner to form a whipped product with a solid-like structure.

The resulting whipped product is a solid-like spreadable fat product with good organoleptic properties, consistency, texture and stability. In addition, the inventors have found additional improvements of the resulted whipped product which has good mouthfeel and taste, appearance, and excellent properties as spreads, since the consistency and quantity thereof applied can be controlled easily to a suitable level.

Furthermore, the liquid edible fat emulsion according to the invention can be formulate at different fat contents and lacks of texturizing agents or thickeners. Surprisingly, the resulted whipped spreadable fat product formulated without said texturizing agents or thickeners has excellent consistency, stability and appearance and is sufficiently soft to be spread unproblematic directly from a refrigerator (temperature of about 4-6 °C). The consistency of the resulting whipped spreadable fat product can be varied for example by varying the fat content of the liquid edible fat emulsion. Products according to the invention can be, for example, whipped butter or whipped margarine-like products which have excellent mouthfeel upon consumption with a creamy and fresh taste impression.

Indeed, the whipped spreadable fat product dispensed from the pressure container according to the invention can be a whipped spreadable milk fat product, such as whipped butter, a whipped spreadable vegetable fat product, such as whipped margarine, or a whipped spreadable blend fat product depending on the origin of the fat used.

Accordingly, in its broadest aspect, the present invention relates to liquid edible fat emulsion comprising:
a) between 10% and 80% by weight of a vegetable fat, or a spreadable fat product or a mixture thereof,
b) between 15% and 80% by weight of water,
c) between 0.5 % and 2 % by weight of milk proteins or soy proteins,
d) between 0.5% and 3% by weight of food additives,
wherein said liquid edible fat emulsion has a viscosity between 20 and 400 cP measured at a temperature of 15 °C and shear rate from 0 to 300 s⁻¹ and, with the proviso that the food additive is not a thickener or a texturing agent. Preferably, said liquid edible fat emulsion has a viscosity between 20 and 80 cP measured at a temperature of 15 °C and shear rate from 0 to 300 s⁻¹.

Spreadable fat products comprise milk fat products, vegetable fat products, animal fat products and mixed fat products with a total fat content between 10% and 90%, said products should remain solid at room temperature (20 °C) and are suitable for use as spreads. In one particular embodiment, the spreadable fat product is selected from the group consisting of butter, margarine, blend, dairy spread with a fat content between 62% and 80%, fat spread with a fat content between 62% and 80%, blended spread with a fat content between 62% and 80%, three-quarter fat butter, three-quarter fat margarine, three-quarter fat blend, reduce fat butter, reduce fat margarine, reduce fat blend, reduce fat dairy spread with a fat content between 41 % and 60%, reduce fat spread with a fat content between 41% and 60%, reduce fat blended spread with a fat content between 41% and 60%, half-fat butter, half-fat margarine, half-fat blend, low-fat butter, low-fat margarine, low-fat blend, light butter, light margarine, light blend, low-fat dairy spread with a fat content between 39% and 10%, low-fat spread with a fat content between 39% and 10%, low-fat blend with a fat content between 39% and 10%, and mixtures thereof. Preferably, said spreadable fat product is butter. More preferably, the spreadable fat product is butter 82% fat.

Vegetable fats are lipid materials derived from plants. In the context of the present invention said vegetable fats comprise fats and oils. Physically, oils are liquid at room temperature, and fats are solid. Accordingly, in another particular embodiment, the vegetable fat is selected from the group consisting of sunflower oil, olive oil, soybean oil, corn oil and palm oil. Preferably, said vegetable fat is sunflower oil.

Milk proteins comprise any protein occurring in milk, as well as any milk or milk derived protein fraction. For example, the milk protein may be selected from the group consisting of the protein fraction of skimmed milk, milk protein concentrate, milk protein isolate, caseinate, micellar casein, caseins or salts thereof, milk powder, caseinates, the protein fraction of acid or sweet whey, whey protein concentrate, whey protein isolate, α-lactalbumin, β- lactoglobulin, bovine serum albumin, lactoferrin, and combinations thereof. Preferably, said milk protein is whey protein isolate. The amount of milk protein contained in the liquid edible fat emulsion of the present invention is preferably from 0.5% to 2.0% by weight, and more preferably from 1.0% to 1.5% by weight based on the total weight of the liquid edible fat emulsion.

In another particular embodiment, the soy proteins comprise soy protein isolates, soy protein concentrates and combinations thereof.

In one particular embodiment, the food additives are selected from the group consisting of emulsifiers, acidity regulators, preservatives, flavoring agents, colorants and mixtures thereof.

In another particular embodiment, the food additive in the liquid edible fat emulsion as defined herein above comprises an emulsifier, wherein said emulsifier can be a lipophilic and/or a hydrophilic emulsifier. Examples of emulsifiers include without limitation, esters of fatty acids, glycerin fatty acid esters, salts of fatty acid lactylates (e.g., sodium and calcium stearoyl-2-lactylate), lactylated monoglyceride (LMG), polyglycerolesters of fatty acids (such as octaglycerol-monooleate, polysorbates, polyoxyethylene (20) sorbitan monostearate, polyoxyethylene (20) sorbitan monooleate and polyoxyethylene (20) sorbitan tristearate), fatty acid monoglycerides, fatty acid diglycerides, acetic acid esters of monoglycerides, acetylated monoglyceride (AMG), lactic acid esters of monoglycerides, lipophilicpolyglycerol esters, citric acid esters of monoglycerides (citrated monoglyceride), citric acid esters of diglycerides, glycerol esters (e.g., glyceryl monooleate, glyceryl dioleate, glyceryl monostearate, glyceryl distearate, glyceryl monopalmitate, and glyceryl dipalmitate lactylated), glyceryl-lacto esters of fatty acids, propylene glycol esters of fatty acids, propyleneglycol esters (e.g., propylene glycol monopalmitate, propylene glycol monostearate, and propylene glycol monooleate), polyglycerol esters of fatty acids, polyglycerol ester (PGE), sorbitan esters of fatty acids, sorbitan esters (e.g., sorbitan monostearate, sorbitan trioleate, sorbitan tripalmitate, sorbitan tristearate, and sorbitansesquioleate), succinic acid esters of monoglycerides (SMG), diacetyl tartaric acid esters of monoglycerides (DATEM), sucrose esters of fatty acids, sugar ester (SE), calcium stearoyl dilaciate (CSL) and lecithin. Milk proteins can also act as emulsifiers. Particularly, preferred emulsifiers are fatty acid monoglycerides, fatty acid diglycerides, citric acid esters of monoglycerides, citric acid esters of diglycerides, milk proteins and mixtures thereof. Preferably, the emulsifier is used in an amount from 0.8% to 0.3% by weight, with respect to the total weight of the liquid edible fat emulsion.

In another particular embodiment, the acidity regulator comprises lactic acid or citric acid. Preferably, said acidity regulator is used in an amount less than or equal to 0.2% by weight based on the total weight of liquid edible fat emulsion.

In another particular embodiment, the preservative comprises benzoic acid or salts thereof, sorbic acid or salts thereof and mixtures thereof.

Additionally, other food additives can be included such as flavoring agents and colorants. Flavoring agents which may be used are salt and aromas. A colorant, such as β-carotene, may be added.

Preferably, the food additives used in the liquid edible fat emulsion according to the invention are an emulsifier, salt, lactic acid, a preservative, an aroma and a colorant.

The liquid edible fat emulsion of the present invention does not contain a thickener, food hardener, gelling agent or a texturing agent. Examples of such thickeners or texturing agents are starch, gelatin, gelifing agents, gum starches, vegetable gums, pectin, guar gum, locust bean gum, carrageenan, xanthan gum, alginates, cellulose ethers and mixtures thereof, when said ingredients fulfill the function of thickeners or texturing agents or are used for this purpose.

In a particular embodiment, the liquid edible fat emulsion as defined herein above further comprises cream. Particularly, the preferred cream is cream 40% fat. Preferably, the amount of cream is between 1 and 30% by weight, with respect to the total weight of the emulsion.

In another particular embodiment, the liquid edible fat emulsion as defined herein above has a total fat content between 10% and 80% by weight with respect to the total weight of the emulsion. Preferably, the total fat content of the liquid edible fat emulsion is between 40 % and 80% by weight, with respect to the total weight of the emulsion. More preferably, the total fat content of the liquid edible fat emulsion is between 49 % and 80% by weight, with respect to the total weight of the emulsion.

In another particular embodiment, the liquid edible fat emulsion as defined herein above has a non-fat dry matter content between 1.5% and 3% with respect to the total weight of the emulsion.

In another particular embodiment, the liquid edible fat emulsion according to the invention is liquid between 2 °C and 70 °C.

In another particular embodiment, the liquid edible fat emulsion as described and defined herein above is packaged with a gas propellant. Thus, the liquid edible fat emulsion is held or injected with a gas propellant in a pressurized container. The pressurized container is preferably designed as an aerosol, spray can or siphon-type bottle provided with a valve and/or a nozzle. Accordingly, the liquid edible fat emulsion is controllably dispensed or ejected from the packaging through the container valve and/or nozzle with the gas propellant in a whipped spreadable solid-like form.

Preferably, the pressure in the pressurized container is achieved by the incorporation in the container of a propellant gas that partially dissolves in the emulsion, such as nitrous oxide. In one particular embodiment, the amount of gas propellant is between 1.6 g and 3.2 g per 100 g of liquid edible fat emulsion.

In another particular embodiment, the gas propellant comprises nitrous oxide or a mixture of between 50% and 80% by weight of nitrous oxide and between 50% and 20% by weight of nitrogen, with respect to the total weight of gas propellant. Preferably, said gas propellant comprises a mixture of between 65% and 70% by weight of nitrous oxide and between 35% and 30% by weight of nitrogen, with respect to the total weight of gas propellant.

In another aspect, the present invention relates to a pressurized container containing the liquid edible fat emulsion as described and defined herein above and a gas propellant, wherein said gas propellant comprises nitrous oxide or a mixture of between 50% and 80% by weight of nitrous oxide and between 50% and 20% by weight of nitrogen, with respect to the total weight of gas propellant. Preferably the gas propellant comprises a mixture of between 65% and 70% by weight of nitrous oxide and between 35% and 30% by weight of nitrogen, with respect to the total weight of gas propellant.

In one particular embodiment, the amount of gas propellant present in the pressurized container according to the invention is between 1.6 g and 3.2 g per 100 g of liquid edible fat emulsion.

In another particular embodiment, the pressurized container has a discharging nozzle and/or valve for controllably dispending or ejecting the liquid edible fat emulsion with the gas propellant in a whipped spreadable solid-like form.

In another particular embodiment, the pressurized container which held the liquid edible fat emulsion and the gas propellant is a spray container, an aerosol, a spray can, a pressurized bottle with a valve, a siphon bottle or a cream siphon provided with a valve and/or a nozzle. It may also be prepared in reusable dispensers, similar to a siphon bottle, using disposable gas cartridges.

In another aspect, the invention also relates to a process for obtaining a whipped spreadable fat product comprising:
a) forming a liquid edible fat emulsion as defined herein above,
b) heating the liquid edible fat emulsion to a temperature comprised between 70 °C and 130°C,
c) cooling the liquid edible fat emulsion,
d) packaging the liquid edible fat emulsion in combination with a gas propellant in a pressurized container,
wherein said propellant is present in an amount sufficient to produce a stable solid-like whipped spreadable fat product when the liquid edible fat emulsion is dispensed with the gas propellant through a container valve and/or nozzle. Preferably, the amount of gas propellant present in the pressurized container is between 1.6 g and 3.2 g per 100 g of liquid edible fat emulsion.

In one particular embodiment, the gas propellant used in the packaging step of the process comprises nitrous oxide or a mixture of between 50% and 80% by weight of nitrous oxide and between 50 and 20% by weight of nitrogen with respect to the total weight of gas propellant. Preferably, the gas propellant comprises a mixture of between 65% and 70% by weight of nitrous oxide and between 35% and 30% by weight of nitrogen, with respect to the total weight of gas propellant.

In another particular embodiment, the heat treatment of the liquid edible fat emulsion is carried out at temperatures between 90 °C and 95 °C for 10 to 40 seconds.

In another particular embodiment, the cooling step is carried out at a temperature comprised between 15 °C and 20 °C.

Accordingly, in another aspect, the present invention provides a whipped spreadable fat product obtained by dispending the liquid edible fat emulsion as defined herein above with a gas propellant from a pressurized container through the container nozzle and/or valve, wherein the amount of the gas propellant present in the pressurized container is between 1.6 g and 3.2 g per 100 g of liquid edible fat emulsion. Preferably, said gas propellant comprises nitrous oxide or a mixture of between 50% and 80% by weight of nitrous oxide and between 50 and 20% by weight of nitrogen with respect to the total weight of gas propellant. More preferably, the gas propellant comprises a mixture of between 65% and 70% by weight of nitrous oxide and between 35% and 30% by weight of nitrogen, with respect to the total weight of gas propellant.

In one particular embodiment, the whipped spreadable fat product as described herein above has a total fat content between 10% and 80% by weight, with respect to the total weight of the whipped spreadable fat product.

In another particular embodiment, the whipped spreadable fat product as described herein above has a non-fat dry matter content between 1.5% and 3% by weight, with respect to the total weight of the whipped spreadable fat product.

The types and ratios of fat/oil present in the whipped spreadable fat product according to the invention can vary depending on the types and ratios of fat/oil used to prepare the liquid edible fat emulsion described herein above. Therefore, in one particular embodiment the whipped spreadable fat product according to the invention is preferably whipped spreadable butter, whipped spreadable margarine, whipped spreadable dairy spread, whipped spreadable half-fat butter, whipped spreadable half-fat margarine, whipped spreadable half-fat blend, whipped spreadable three-quarter butter, whipped spreadable three-quarter margarine or whipped spreadable three-quarter blend.

In another particular embodiment, the whipped spreadable fat product as defined herein above has an overrun of between 100% and 500%, when dispensed from the pressurized container.

In another particular embodiment, the whipped spreadable fat product as defined herein above exhibits satisfactory spreadability over a wide range of temperatures, and a smooth and compact structure.

In another aspect, the present invention provides a packaged liquid edible fat emulsion product comprising:
a) 96-99 % by weight of a liquid edible fat emulsion, based on the total weight of the emulsion and the gas propellant, wherein said liquid edible fat emulsion comprises between 10% and 80% by weight of a vegetable fat, or a spreadable fat product or a mixture thereof, between 15% and 80% by weight of water, between 0.5% and 2% by weight of milk proteins or soy proteins and between 0.5% and 3% by weight of food additives,
b) 1-4 % by weight of a gas propellant, based on the total weight of the emulsion and the gas propellant, wherein said gas propellant comprises nitrous oxide or a mixture of between 50% and 80% by weight of nitrous oxide and between 50% and 20% by weight of nitrogen with respect to the total weight of gas propellant, within a pressurized container, which controllably discharged the liquid edible fat emulsion with the gas propellant in a whipped spreadable solid-like form.

In one particular embodiment, the packaged liquid edible fat emulsion product comprises a liquid edible fat emulsion which has a viscosity between 20 and 400 cP measured at a temperature of 15 °C and shear rate from 0 to 300 s⁻¹. Preferably, said packaged liquid edible fat emulsion has a viscosity between 20 and 80 cP measured at a temperature of 15 °C and shear rate from 0 to 300 s⁻¹.

In another particular embodiment, the packaged liquid edible fat emulsion product comprises a liquid edible fat emulsion comprising food additives, wherein said food additives are selected from the group consisting of emulsifiers, acidity regulators, preservatives, flavoring agents, colorants and mixtures thereof, and with the proviso that the food additive is not a thickener or a texturing agent.

In another particular embodiment, the packaged liquid edible fat emulsion product comprises a gas propellant comprising nitrous oxide or a mixture of between 65% and 70% by weight of nitrous oxide and between 35% and 30% by weight of nitrogen, with respect to the total weight of gas propellant.

Furthermore, the packaged liquid edible fat emulsion product of the present invention does not exhibit microbiological spoilage or functional spoilage for at least four months. The packaged liquid edible fat emulsion product can be maintained at refrigeration temperature without disruption of the integrity of the dispensed whipped spreadable fat product.

The embodiments described above are considered to be illustrative in all respects and not restrictive, the scope of the invention being indicated by claims rather than by the foregoing description. Those skilled in the art will recognize that the preferred modes may be altered or amended without straying away from the true spirit and scope of the invention as defined in the claims.

### Brief description of the figures

For the purpose of better illustrating the advantages and properties of the products and the process object of the invention, several graphs and images are attached as non-limiting examples:
Figure 1 shows the variation of viscosity at shear rate from 0 to 300 s⁻¹ measured at 15 °C and 10 °C.
Figure 2 shows viscosity vs. shear stress measured at 10 °C.

### Detailed explanation of the invention

The liquid edible fat emulsion according to the present invention is a oil/fat in water emulsion prepared by standard methods of homogenization or emulsification known in the art, wherein the oil phase comprising an emulsifier and a vegetable fat, or a spreadable fat product or a mixture thereof, is mixed with the water phase, which additionally comprises milk proteins, preservatives, salt, flavoring agents or colorants. Said oil phase can additionally comprises cream. Both phases are mixed under stirring to form a pre-emulsion.

The liquid edible fat emulsion according to the present invention does not require the addition of thickeners, food hardeners, gelling agent or other texturing agents (e. g. carrageenan) to achieve stability and optimal quality of the end whipped spreadable product.

The resulting pre-emulsion is subjected to a heat treatment, such as pasteurization, sterilization or UHT treatment. Pasteurization comprises heating to a target minimum temperature of 71.7 °C for at least 15 seconds. The sterilization heat treatment is typically performed at temperatures above 135 °C for at least 1 second. Moreover, the UHT heat treatment temperature is comprised between 135 °C and 160 °C which is maintained for a time comprised between 2 and 90 seconds. The conditions of the heat treatment step are not specifically limited, and the temperature and time are controlled so as to suppress microbiological spoilage during storage and extend the shelf life without causing a change in the organoleptic properties or functionality of the end product.

Preferably, the liquid edible fat emulsion according to the present invention undergoes a heat treatment carried out by means of a pasteurization process at temperatures between 90 °C and 95 °C for 10 to 40 seconds, to obtain a pasteurized emulsion.

After cooling to room temperature, the resulting liquid edible fat emulsion is a stable oil in water emulsion, which is liquid between 2 °C and 70 °C and has a viscosity and fluidity suitable for being packaged in a pressurized container without the need of further heating or treatment.

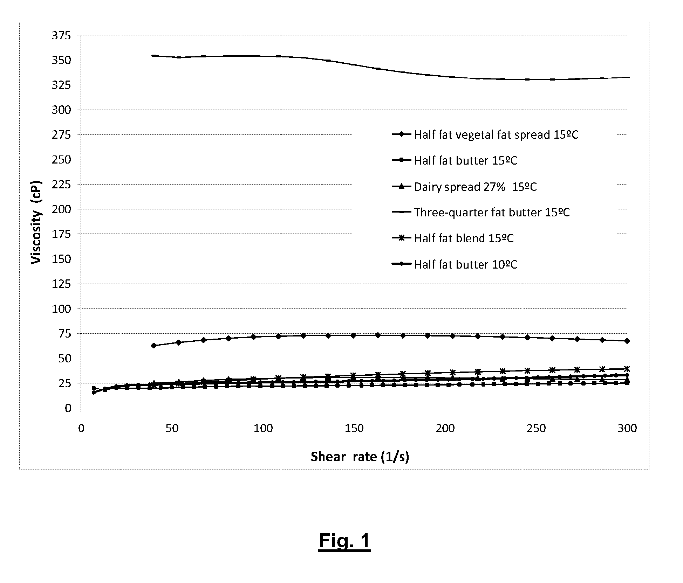

As shown in Fig. 1, the viscosity of the liquid edible fat emulsion according to the invention measured with an Anton Paar rotacional viscometer is comprised between 20 and 400 cP at shear rate from 0 to 300 s⁻¹ and a temperature of 15 °C.

The liquid edible fat emulsion according to the invention is then charged into a container (e.g. a spray can, an aerosol container or a siphon-type bottle). The pressure in the pressurized container is achieved by the incorporation in the container of a gas propellant that partially dissolves in the emulsion. The step of packaging is generally performed by known methods. Typically, the gas propellant is injected in the container, through a container nozzle and/or valve for 1 to 8 seconds, preferably for 3 to 5 seconds to reach pressure of 12 bars. The pressurized containers are then shacked to reduce the internal pressure to 8 bars.

After through research the inventors have found that to obtain an optimal overrun and good delivery on the end product, the gas propellant must be charged or injected into the container in an amount between 1.6 g and 3.2 g of gas propellant per 100 g of liquid edible fat emulsion. To obtain the desired overrun while retaining the stability, mouth feel and appearance of the whipped spreadable fat product to be obtained, the gas propellant held with the liquid edible fat emulsion into the pressurized container comprises nitrous oxide or a mixture of nitrous oxide and nitrogen. Nitrous oxide is an inert gas which substantially does not affect the taste of the liquid edible fat emulsion. Additionally, other gases tested such as CO₂ did not dispense the liquid edible fat emulsion packaged with the correct consistency and texture of a whipped product giving an unstable product which does not remain spreadable or in a solid-like form.

The container has a discharging nozzle or/and valve for controllably dispensing the emulsion with the gas propellant in a desired whipped solid-like form. When the nozzle is pressed the emulsion comes out, thus the whipped spreadable fat product is formed at the time of ejecting. The liquid fat emulsion becomes whipped when it is allowed to expand through a nozzle and/or valve with the gas propellant to ambient pressure. The dispensed whipped spreadable fat product is in the form of a solid-like emulsion being an oil in water and gas emulsion.

The pressurized container can be, for example, a siphon-type bottle comprising between 1.6 g and 3.2 g of nitrous oxide per 100 g of liquid edible fat emulsion. Furthermore, the liquid fat emulsion can be optionally charged into an aerosol or spray can with a gas mixture comprising nitrogen oxide and nitrogen. This packaging enables to obtain a whipped spreadable fat product with good overrun and shape-maintaining property when extruded from the aerosol container.

In this application, the term 'butter' refers to a product with a milk fat content of not less than 80% but less than 90%, a maximum water content of 16% and a maximum dry non-fat milk material content of 2%. The term 'butter product' may be used for composite products of which an essential part in terms of quantity or characterization is butter if the end product contains at least 75% milk fat and has been manufactured using butter per se.

The term "pressurized container" as used herein, refers to any packaging which holds the liquid edible fat emulsion and which contains a valve and/or a nozzle for dispersing and/or spraying and/or ejecting the fat emulsion from the packaging in a controlled manner when the valve is opened. The contents of the packaging are under pressure and are dispensed in a whipped or aerated state, as a result of the container holding a gas propellant.

The term "cream" as used herein, refers predominantly to a water continuous emulsion product with a milk fat content between 10% and 55%.

The term "overrun" as used herein, refer to the change in volume undergone by a given volume of the product because of aeration. Thus, the percent overrun indicates the volume increase of the dispensed whipped spreadable fat product compared with the volume in the state as it is held in the container.

All percentages as used herein pertaining to listed ingredients comprising the liquid edible fat emulsion of the present application are weight percentages, calculated based on the total weight of said liquid edible fat emulsion unless otherwise specified.

The following examples are provided to further illustrate the products and process according to the present invention. The examples provided below are illustrative and are not intended to limit the scope of the claimed invention.

### Example 1: Whipped half-fat butter.

**Table 1**

| Ingredient | Amount % |
|---|---|
| Butter 82 % fat | 37 |
| Cream 40% fat | 23 |
| Water | 37 |
| Milk protein | 0.8-1.2 |
| Emulsifier | 0.7-0.3 |
| Lactic acid | 0.2 |
| Preservatives | 0.1 |
| Sal | 0.4 |
| Flavoring agent | 0.1 |
| Colorant | 0.1 |

The starting liquid edible fat emulsion was prepared by mixing the butter with the emulsifier in a tank provided with stirring at 70 °C. After the butter was melted and mixed, cream and water were added and mixed for 2-5 minutes. The following food additives were added under stirring to the mixture: a milk protein, a preservative, salt, a flavoring agent and a colorant forming a stable pre-emulsion. Additionally, lactic acid was added to the pre-emulsion until reaching a pH between 4.9 and 5.1.

This pre-emulsion was preheated in a tubular heat exchanger to 90-92 °C for 30-40 seconds. The homogenization process was carried out in 2 steps reaching a final pressure of 200 bars. The emulsion formed was then cooled to 15-20°C.

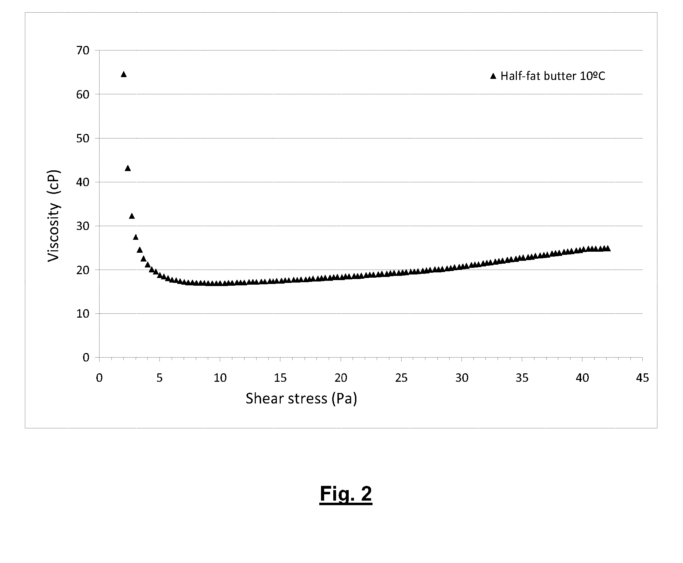

The resulting emulsion was a fat in water homogenous emulsion with a viscosity of 20-30 cP measured at 15 °C and a viscosity of 25-35 cP measured at 10 °C (Figure 1). The viscosity under a shear stress from 6 to 45 Pa and measured at 10°C was 17-25 cP (Figure 2).

The prepared abovementioned liquid edible fat emulsion was filled into a siphon-type bottle and an aerosol. Both containers are then pressurized with a gas propellant. The siphon-type bottle was first filled with 500g of liquid fat emulsion and then charged with 8 g of nitrogen oxide (N₂O).

Additionally, the liquid fat emulsion was charged into an aerosol container with a gas mixture comprising nitrogen oxide (N₂O) and nitrogen (N₂). The amount of gas used was 1.1 g of N₂ and 2.2 g of N₂O per 150 g of liquid edible fat emulsion.

Accordingly, when the emulsion leaves the container through the nozzle, it causes a volume increased of the emulsion produced by whipping the gas into it. The dispensed product obtained from the pressurized container is a whipped spreadable half-fat butter product with a total fat content of 40% and a non-fat dry matter content of 2%.

The whipped half fat butter according to example 1 had an overrun of 100-500% and a standing time of at least 15 minutes at 20 °C after being dispensed from the pressurized container; the product was spreadable with a solid-like consistency and appearance.

### Example 2: Whipped dairy spread.

**Table 2**

| Ingredient | Amount % |
|---|---|
| Butter 82 % fat | 32 |
| Cream 35% fat | 1 |
| Water | 64.1 |
| Milk protein | 1.3-1.7 |
| Emulsifier | 0.7-0.3 |
| Lactic acid | 0.2 |
| Preservatives | 0.1 |
| Sal | 0.4 |
| Flavoring agent | 0.1 |
| Colorant | 0.1 |

A fat in water emulsion was prepared having the formulation indicated in table 2 and following the process described in example 1. The viscosity of the liquid edible fat emulsion obtained measured at 15 °C was 25-30 cP (Figure 1).

This emulsion was packaged into a siphon-type bottle and into an aerosol container as described herein above. The whipped dairy spread dispensed from the pressurized container was a solid-like whipped spreadable product with a final fat content of 27% and a non-fat dry matter content of 2.7 %. The whipped dairy spread 27% fat had an overrun of 100-500% and stood up for at least 15 minutes at 20 °C, after being dispensed from the pressurized container.

### Example 3: Whipped three-quarter butter.

**Table3**

| Ingredient | Amount % |
|---|---|
| Butter 82 % fat | 68 |
| Cream 35% fat | 11 |
| Water | 19.3 |
| Milk protein | 0.8-1.2 |
| Emulsifier | 0.7-0.3 |
| Lactic acid | 0.2 |
| Preservatives | 0.1 |
| Sal | 0.1 |
| Flavoring agent | 0.05 |
| Colorant | 0.05 |

A liquid fat emulsion according to the invention was prepared by mixing the ingredients from table 3 as described in example 1. The emulsion obtained was a fat in water homogenous emulsion with a viscosity of 300-350 cP measured at 15 °C (Figure 1).

The liquid edible fat emulsion prepared was packaged into two different pressurized containers. 250 g of liquid fat emulsion were charged into a siphon-type bottle and pressurized with 8 g of nitrous oxide. Additionally, 150 g of liquid edible fat emulsion were introduced into an aerosol container with 1.1 g of N₂ and 2.2 g of N₂O. The whipped spreadable three-quarter butter product dispensed from the pressurized container with the gas propellant when the valve was opened had an overrun of 100-500%, stood up for at least 15 minutes at 20 °C and had a total fat content of 60% and a total non-fat dry matter of 1.7%.

### Example 4: Whipped half fat blend.

**Table 4**

| Ingredient | Amount % |
|---|---|
| Butter 82 % fat | 21 |
| Sunflower oil | 23 |
| Water | 53 |
| Milk protein | 1.2-1.6 |
| Emulsifier | 0.7-0.3 |
| Lactic acid | 0.1 |
| Preservatives | 0.1 |
| Sal | 0.1 |
| Flavoring agent | 0.05 |
| Colorant | 0.05 |

The oil phase was prepared by melting the butter in a tank provided with stirring at 70 °C. The melted butter is then mixed with an emulsifier and sunflower oil under constant temperature (70 °C). To prepare the water phase, a milk protein, a preservative, salt, a flavoring agent and a colorant were added to water at 50 °C under stirring, followed by the addition of lactic acid to the water phase until reaching a pH between 4.9 and 5.1. The oil phase was then added to the water phase to form a stable pre-emulsion.

This pre-emulsion was preheated in a jacketed chamber to 85 °C for 2 minutes and then cooled to 15-20 °C to be packaged.

The emulsion obtained was a fat in water homogenous emulsion with a viscosity of 25-40 cP measured at 15 °C (Figure 1).

The prepared abovementioned liquid edible fat emulsion was filled into a siphon-type bottle and into an aerosol. Both containers were then pressurized with a gas propellant. The siphon-type bottle was filled with 500g of liquid edible fat emulsion and 8 g of N₂O. The liquid fat emulsion was optionally charged into an aerosol with a gas mixture comprising nitrogen oxide and nitrogen. The amount the gas used was 1.1 g of N₂ and 2.2 g of N₂O per 150 g of liquid edible fat emulsion.

The dispensed product obtained from the pressurized container was a whipped spreadable half fat blend product with a final fat content of 40 %, a total non-fat dry matter content of 2% and solid-like appearance.

The overrun of the whipped half fat butter spreadable product according to example 4 had an overrun of 100-500% and stood up for at least 10 minutes at 20 °C, after being dispensed from the pressurized container.

### Example 5: Whipped half-fat margarine.

**Table 5**

| Ingredient | Amount % |
|---|---|
| Sunflower oil | 40 |
| Water | 57.15 |
| Milk protein | 1.8-2.0 |
| Emulsifier | 0.7-0.3 |
| Lactic acid | 0.2 |
| Preservatives | 0.1 |
| Potassium chloride | 0.2 |
| Flavoring agent | 0.1 |
| Colorant | 0.05 |

The oil phase was prepared by heating the sunflower oil at 70 °C, and adding an emulsifier.

The water phase was prepared by heating water to 50 °C and adding to the heated water milk proteins, a preservative, potassium chloride, a flavoring agent and a colorant under stirring. Lactic acid was added to the water phase until reaching a pH between 4.9 and 5.1. The oil phase was then added to the water phase and the mixture was passed trough a homogenizer to form a stable pre-emulsion.

The pre-emulsion formed was preheated in a jacketed chamber to 85 °C for 2 minutes. The emulsion formed was then cooled to 15-20 °C to be packaged. Said emulsion was a fat in water homogenous emulsion with a viscosity of 60-70 cP measured at 15 °C (Figure 1).

The abovementioned prepared liquid edible fat emulsion was filled into a siphon-type bottle and an aerosol. Both containers were then pressurized with a gas propellant. The siphon-type bottle was charged with 500 g of liquid fat emulsion and 8 g of N₂O. The liquid fat emulsion can be optionally charged into an aerosol with a gas mixture comprising nitrogen oxide and nitrogen. The amount of gas mixture used was 1.1 g of N₂ and 2.2 g of N₂O per 150 g of liquid edible fat emulsion.

When the emulsion was dispensed from the pressurized container, a volume increase of the emulsion was produced by whipping the gas into it. The dispensed product obtained from the pressurized container was a 100% vegetable whipped half-fat margarine with good spreadability and solid-like consistency, which had a total fat content of 40 % and a total non-fat dry matter content of 3%.

The whipped spreadable half-fat margarine product according to example 5 had an overrun of 100-500% and stood up for at least 10 minutes at 20 °C after being dispensed from the pressurized container.

## Claims

1. Liquid edible fat emulsion comprising:
a) between 10% and 80% by weight of a vegetable fat, or a spreadable fat product or a mixture thereof,
b) between 15% and 80% by weight of water,
c) between 0.5% and 2% by weight of milk proteins or soy proteins,
d) between 0.5% and 3% by weight of a food additive,
wherein said liquid edible fat emulsion has a viscosity between 20 and 400 cP measured at a temperature of 15 °C and shear rate from 0 to 300 s⁻¹ and, with the proviso that the food additive is not a thickener or a texturing agent.

2. The liquid edible fat emulsion according to claim 1, wherein said liquid edible fat emulsion has a viscosity between 20 and 80 cP measured at a temperature of 15 °C and shear rate from 0 to 300 s⁻¹.

3. The liquid edible fat emulsion according to claim 1 or 2, wherein the spreadable fat product is selected from the group consisting of butter, margarine, blend, dairy spread with a fat content between 62% and 80%, fat spread with a fat content between 62% and 80%, blended spread with a fat content between 62% and 80%, three-quarter fat butter, three-quarter fat margarine, three-quarter fat blend, reduce fat butter, reduce fat margarine, reduce fat blend, reduce fat dairy spread with a fat content between 41 % and 60%, reduce fat spread with a fat content between 41 % and 60%, reduce fat blended spread with a fat content between 41% and 60%, half-fat butter, half-fat margarine, half-fat blend and mixtures thereof.

4. The liquid edible fat emulsion according to any one of claims 1 to 3, wherein the vegetable fat is selected from the group consisting of sunflower oil, olive oil, soybean oil, corn oil and palm oil.

5. The liquid edible fat emulsion according to any one of claims 1 to 4, which further comprises between 1% and 30% by weight of cream, with respect to the total weight of the liquid edible fat emulsion.

6. The liquid edible fat emulsion according to any one of claims 1 to 5, wherein the total fat content is between 10% and 80% by weight, with respect to the total weight of the liquid edible fat emulsion.

7. The liquid edible fat emulsion according to any one of claims 1 to 6, wherein the total fat content is between 49% and 80% by weight, with respect to the total weight of the liquid edible fat emulsion.

8. The liquid edible fat emulsion according to any one of claims 1 to 7, wherein the non-fat dry matter content is between 1.5% and 3% by weight, with respect to the total weight of the liquid edible fat emulsion.

9. A pressurized container containing the liquid edible fat emulsion according to any one of claims 1 to 8 and a gas propellant, wherein the gas propellant comprises nitrous oxide or a mixture of between 50% and 80% by weight of nitrous oxide and between 50% and 20% by weight of nitrogen, with respect to the total weight of gas propellant.

10. The pressurized container according to claim 9, wherein the gas propellant comprises a mixture of between 65% and 70% by weight of nitrous oxide and between 35% and 30% by weight of nitrogen, with respect to the total weight of gas propellant.

11. The pressurized container according to claim 9 or 10, wherein the amount of gas propellant is between 1.6 g and 3.2 g per 100 g of liquid edible fat emulsion.

12. A process for preparing a whipped spreadable fat product comprising:
a) forming a liquid edible fat emulsion as defined in any one of claims 1 to 8,
b) heating the liquid edible fat emulsion to a temperature comprised between 70 °C and 130°C,
c) cooling the liquid edible fat emulsion,
d) packaging the liquid edible fat emulsion in combination with a gas propellant in a pressurized container,
wherein said propellant is present in an amount sufficient to produce a stable solid-like whipped spreadable fat product when the liquid edible fat emulsion is dispensed with the gas propellant through a container valve or nozzle.

13. The process according to claim 12, wherein the amount of gas propellant is between 1.6 g and 3.2 g per 100 g of liquid edible fat emulsion and said gas propellant comprises nitrous oxide or a mixture of between 50% and 80% by weight of nitrous oxide and between 50 and 20% by weight of nitrogen, with respect to the total weight of gas propellant.

14. The process according to claim 12 or 13, wherein the gas propellant comprises a mixture of between 65% and 70% by weight of nitrous oxide and between 35% and 30% by weight of nitrogen with respect to the total weight of gas propellant.

15. A whipped spreadable fat product obtained by dispensing the liquid edible fat emulsion from the pressurized container according to any one of claims 9 to 11.

16. A packaged liquid edible fat emulsion product comprising:
a) 96-99 % by weight of a liquid edible fat emulsion comprising between 10% and 80% by weight of a vegetable fat, or a spreadable fat product or a mixture thereof, between 15% and 80% by weight of water, between 0.5% and 2 % by weight of milk proteins or soy proteins, between 0.5% and 3% by weight of a food additive,
b) 1-4 % by weight of a gas propellant comprising nitrous oxide or a mixture of between 50% and 80% by weight of nitrous oxide and between 50% and 20% by weight of nitrogen,
within a pressurized container, which controllably discharged the liquid edible fat emulsion with the gas propellant in a whipped spreadable solid-like form.
